Europäisches Patentamt

European Patent Office

Office européen des brevets

(19)

(11) EP 0 749 190 A2

(12) **EUROPEAN PATENT APPLICATION**

(43) Date of publication:
18.12.1996 Bulletin 1996/51

(51) Int Cl.6: **H02J 3/34**

(21) Application number: 96302582.0

(22) Date of filing: 12.04.1996

(84) Designated Contracting States:
AT CH DE IT LI

(30) Priority: 21.04.1995 US 426201

(71) Applicant: **GENERAL ELECTRIC COMPANY**
Schenectady, NY 12345 (US)

(72) Inventor: **Runkle, Mark Andrew**
Schenectady, New York 12309 (US)

(74) Representative: **Matthews, Graham Farrah et al**
**London Patent Operation,**
**GE International Inc,**
**Essex House,**
**12-13 Essex Street**
**London WC2R 3AA (GB)**

(54) **Interconnection system for electrical systems having differing electrical characteristic**

(57) An electrical interconnection system (100) comprises a rotary converter (102) and a controller (104). The rotary converter (102) is coupled to first and second electrical systems having a differing electrical characteristic (e.g., frequency or phase). The controller (104) bidirectionally operates the rotary converter (102) at a variable speed for transferring power from the first electrical system to the second electrical system.

FIG. 2

## Description

This invention pertains to control of electrical power transmission, and particularly to connection of electrical systems having a differing electrical characteristic.

Some electrical transformers, for example tap-changing transformers such as variacs, merely vary voltage. Other transformers, known as stationary phase shifting transformers, can divert power and move power through a torque angle.

Mere voltage-varying transformers and stationary phase shifting transformers may be adequate for interconnecting two electrical systems operating at the same electrical frequency, or for transmission within a utility company. However, such transformers are incapable of interfacing two electrical systems operating a differing frequency (e.g, inter-utility transfers of electricity).

Today one of the largest power transmission problems is the inability to transfer power across power grids that consistently (over minutes or hours) differ in frequency. For example, in the United States, utilities which are east of the Mississippi River and north of the Mason-Dixon line tend to run in a range of from approximately 60.1 to 60.01 Hertz, while (because of hydro power factors contributed e.g., by the Columbia River/Bonneville power area and the Tennessee Valley Authority) utilities in the southern and western portions of the country tend run slightly slower (e.g, in a range from 59.9 to 59.99 Hertz). The utilities do not maintain a constant frequency, but instead randomly "walk" or wander in the aforementioned ranges.

Electrical systems include directional relays installed to protect a system normally against faults. If one were to build a transmission line between frequency-differing systems such as frequency-differing utilities, the directional relays would be sensitive to phase shift. Over time, the phase vector might cause the directional relays to trip and turn off the transmission line. Thus, presently power transmission between systems of differing frequency can be accomplished only for limited periods of times such as for minutes or for hours, but not for extended times such as a 24 hour period.

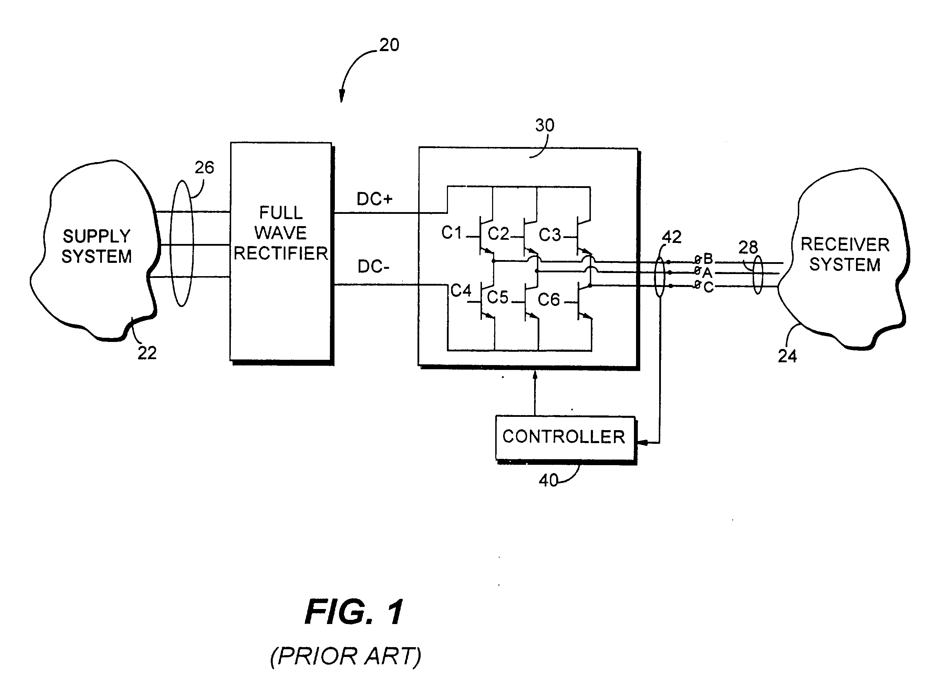

Fig. 1 illustrates a prior art interconnection system 20, also known as a DC-link interconnect, which is presently used to interconnect electrical systems (e.g., differing utilities or power grids) operating at differing frequencies. Fig. 1 shows interconnection system 20 connecting a supply system 22 and a receiver system 24. Supply system 22 is connected to interconnection system 20 by lines 26 for supplying, in the illustrated example, a three-phase input signal of frequency F1 (F1 being the frequency of supply system 20). Interconnection system 20 is connected by lines 28 to receiver system 24, with lines 28 carrying a three-phase output signal of frequency F2 from interconnection system 20 to receiver system 24 (F2 being the frequency of supply system 20, F2≠F1).

Interconnection system 20 includes a full wave rectifier for rectifying the input signal on lines 26 to a DC signal, with the DC signal being applied to a transistorized network 30. Network 30 comprises a plurality of transistors or switches C1, C2, ... C6 (collectively referenced as switches C), with gates of the switches C being operated by controller 40. As depicted at 42, controller 40 senses frequency and phase of the output signal from interconnection system 20.

Thus, interconnection system 20 rectifies the AC input signal on lines 26 to DC, and then inverts from DC back to AC (on lines 28) synchronized with frequency F2 of the receiving system 24. This involves either manual or, in the case of controller 40, automatic operation of switches C. In essence, interconnection system 20 rectifies the input signal to DC, and then chops back to the clock frequency of the receiver system 24.

Unfortunately, interconnection system 20 is prone to reliability problems, especially failure of the switches C (the switches C being expensive to replace). Moreover, as mentioned above, interconnection system 20 is effectively operative for power transfer between systems 22 and 24 only for limited periods of time. Yet further, interconnection system 20 is expensive to operate, with system or grid interconnection costing as much as $200/kVA.

Rotary converters have been utilized for decades to convert power at one constant frequency to a second constant frequency (e.g., to step from 50 Hz to 60 Hz). But rotary converters run continuously at one predetermined speed (at hundreds or thousands of RPMs), acting as motors that actually run themselves. Prior art rotary converters accordingly cannot address the problem of interconnecting two public utilities that are random walking in their differing frequency distributions.

According to the invention there is provided an electrical interconnection system comprising a rotary converter for coupling to first and second electrical systems having a differing electrical characteristic (e.g. frequency or phase), and a controller which bidirectionally operates the rotary converter at a variable speed for transferring power from the first electrical system to the second electrical system.

The rotary converter comprises a rotor connected to the first electrical system; a stator connected to the second electrical system; an actuator for rotating the rotor; and, a feedback network which detects magnitude of the differing electrical characteristic. The controller is responsive to the magnitude detected by the feedback network for controlling the actuator whereby the rotor is bidirectionally rotated at a variable speed. The variable speed is typically no more than 50 revolutions of rotary converter per minute.

In some embodiments, the actuator is a motor, and a gear is provided for interfacing the motor with the rotor. In one particular embodiment, the gear is a worm gear.

While in some embodiments the differing electrical characteristic is electrical frequency, in one embodiment the system is operated as a phase shifting transformer.

In the phase shifting transformer embodiment, the rotor assembly does not move more than +/- 90 degrees.

The interconnection system of the present system is utilizable in a substation for connecting asynchronous electrical systems, such as first and second power grids having differing electrical frequencies. The interconnection system of the invention not only transfers power, but can also modify power in mid-air, by accomplishing phase shift on-the-fly.

## BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1 is schematic view of a prior art DC-link interconnect used to interconnect electrical systems operating at differing frequencies.

Fig. 2 is a partial schematic, partial perspective view of an electrical power interconnection system accordinq to an embodiment of the invention.

Fig. 3A is a side view of an electrical power interconnection system according to an embodiment of the invention which utilizes a worm gear.

Fig. 3B is top view of the electrical power interconnect system of Fig. 3A.

Fig. 4 is a schematic view of a substation for electrical interconnecting a first electrical system and to a second electrical system.

Fig. 5 is a graph showing torque-control requirements of the electrical power interconnection system of the present invention.

Fig. 6 is a graph showing a capability curve of the electrical power interconnection system of the present invention.

## DETAILED DESCRIPTION OF THE DRAWINGS

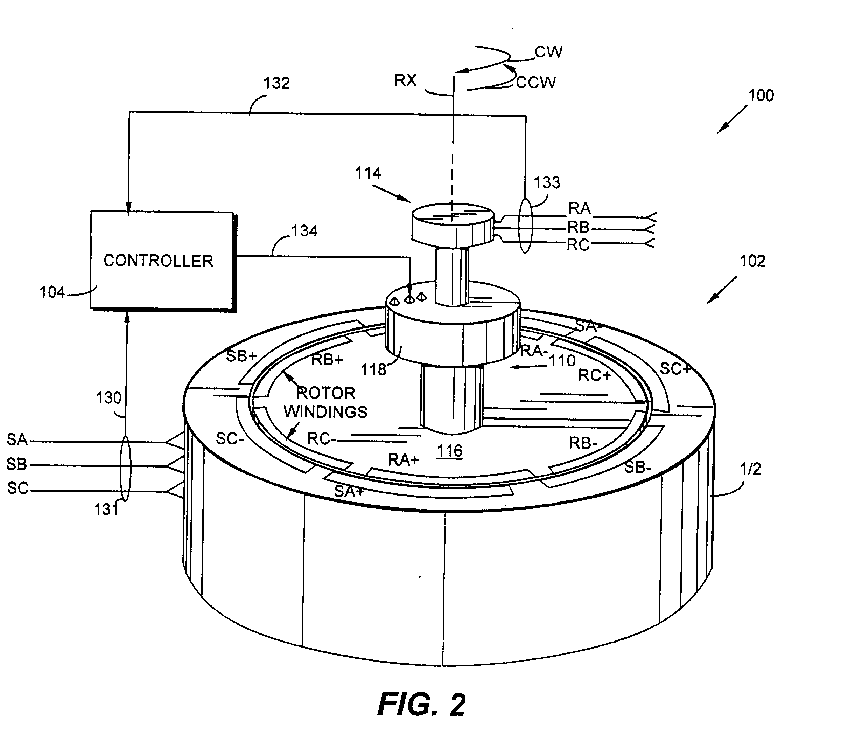

Fig. 2 shows an electrical power interconnection system 100 which includes a rotary converter assembly 102 and a controller 104. As described in more detail below, rotary converter assembly 102 is connected by 3-phase lines RA, RB, RC to an illustrated first electrical system and by 3-phase lines SA, SB, and SC to a second electrical system. As also explained below, the first electrical system and the second electrical system having a differing electrical characteristic.

Rotary converter assembly 102 includes both a rotor subassembly 110 and a stator 112. Rotor subassembly 110 includes collector rings 114 (also known as slip rings), rotor cage section 116; and rotor drive section 118. Three-phase lines RA, RB, RC leading from the first electrical system are connected to collector rings 114;

three-phase lines SA, SB, and SC leading to the second electrical system are connected to stator 112.

As shown in Fig. 2 and understood by the man skilled in the art, in the illustrated embodiment rotary converter assembly 102 is wound with sixty degree phase belts, with rotor windings being labeled as RA+, RC-, RB+, RA-, RC+, and RB- and stator windings labeled as SA+, SC-,

SB+, SA-, SC+, and SB-. It should be understood that the invention is not limited to a sixty degree phase belt-wound system, rather the principles of the invention are applicable for rotary converter assemblies of phase two and greater.

Rotor assembly 110 is rotatable about its axis RX in both clockwise direction CW and counter-clockwise direction CCW. Rotation of rotor assembly 110 is effected by rotor drive section 118.

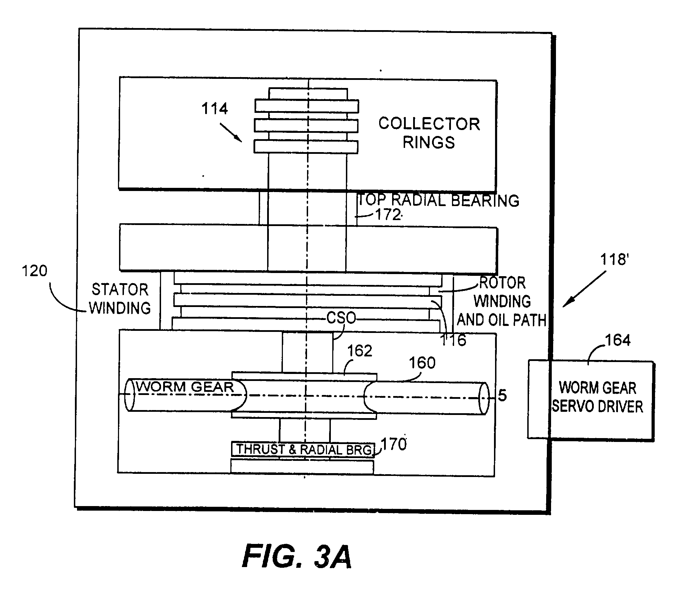

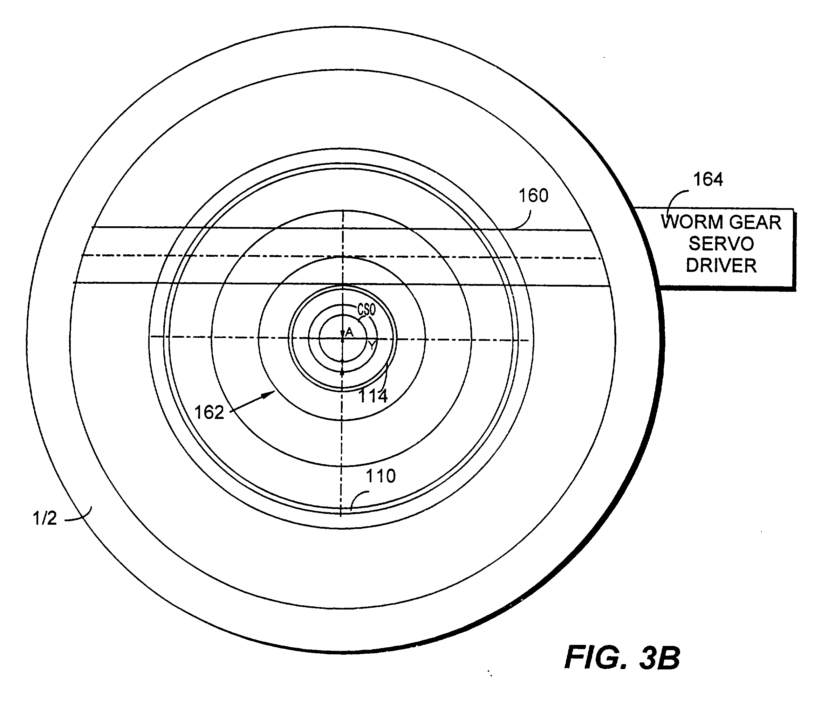

Rotor drive section 118 is shown symbolically in Fig. 2 as a toroidal section mounted on rotor assembly 110. Thus, rotor drive section 118 of Fig. 2 generally depicts various alternative and different types of drive mechanisms for causing rotation of rotor assembly 110. In some embodiments, rotor drive section 118 includes an actuator and some type of linkage (e.g., gearing) which interfaces with rotor assembly 100. For example, in one embodiment rotor drive section 118 comprises a worm gear drive arrangement as shown in Fig. 3A and Fig. 3B and discussed hereinafter. In other embodiments, rotor drive section 118 comprises an actuator such as a stepper motor acting through a radial (e.g, spur) gear, a hydraulic actuator turning a gear on rotor assembly 110, or a pneumatic actuator turning a gear on rotor assembly 110. Any suitable drive mechanism may be employed for rotor drive section 118 so long as it is compatible with the closed loop angular position of rotor assembly 110 as described herein.

As mentioned above, controller 104 bidirectionally operates the rotor assembly 110 (through rotor drive section 118) at a variable speed for transferring power from the first electrical system to the second electrical system. Thus, unlike conventional rotary converters, rotor assembly 110 is not rotated at a constant angular velocity, but instead is rotated at a continuously variable angular velocity as required by controller 104. Moreover, bidirectional angular velocity is achieved as rotor assembly 110 is rotatable in both clockwise direction CW and counter-clockwise direction CCW as shown in Fig. 2.

As shown in Fig. 2, controller 104 forms part of a feedback network which monitors one or more selected electrical characteristic of both the first electrical system and the second electrical system, as indicated by feedback monitor leads 130, 132, respectively, connected to sensors 131, 133, respectively. Upon comparison of the selected electrical characteristic(s), controller 104 develops a drive signal which is applied on drive line 134 to rotor drive section 118. The directionality (e.g, polarity) and magnitude of the drive signal on line 134 are used by rotor drive section 118 to angularly adjust rotor assembly 110. The directionality of the drive signal on line 134 determines whether rotor assembly 110 is to be rotated in clockwise direction CW or counter-clockwise direction CCW; the magnitude of the drive signal on line 134 determines the extent of the rotation. For example, by appropriate directionality and magnitude of the drive signal on drive line 134, controller 104 can cause rotor assembly 110 to rotate slowly in the clockwise direction CW, then rotate slowly backward (in the counter-clockwise direction CCW), and perhaps even come to a dead stop until circumstances warrant further rotation (in either the clockwise CW or counter-clockwise direction CCW).

In the embodiment illustrated in Fig. 2, the first and second electrical systems have differing ranges of electrical frequencies, with the frequencies in each electrical system wandering through their respective ranges. For example, at a given moment, the first electrical system operates at a first frequency while the second electrical system operates at a second frequency.

In such embodiment, systems controller 104 monitors electrical frequencies of the first and second electrical systems using the feedback network which includes monitor lines 130 and 132. In the illustrated embodiment, sensors 131 and 133 are frequency sensors. In monitoring electrical frequency, controller 104 outputs its drive signal on line 134 to adjust the angular position of the rotary converter to match the phase of the first electrical system and the phase of the second electrical system. In other words, controller 104 maintains a phase lock between the first electrical system and the second electrical system. Ideally, when the systems are paralleled, the phase difference between the systems is zero degrees. It is incumbent upon controller 104 to provide an electrical phase shift as a function of time that makes up any difference between the two systems. When paralleling at time t0,

$$F1(t0)*t0 + phase1 = F2(t0)*t0 + phase2$$

where F1(t) and F2(t) represent the frequencies of the respective first and second electrical systems as functions of time. For all subsequent times t greater than t0, controller 104 must control to a function phasem(t) such that:

$$F1(t)*t + phase1 + phasem(t) = F2(t)*t + phase2$$

or

$$phasem(t) = F2(t)*t + phase2 - F1(t)*t - phase1.$$

In the foregoing expressions, phase refers to electrical phase. If there are more than two poles, the relationship between mechanical degrees on rotor assembly 110 and electrical degrees is

$$mechanical\ degrees = 2/\#poles * electrical\ degrees.$$

Phase shift is accomplished by physically displacing rotor assembly 110 relative to stator 120. The angular position of rotor assembly 110 may be maintained, advanced, or retarded at will. The phase shift is accomplished by changing rotor angular position and thus modifying the mutual inductances among the phases of interconnection system 100.

The number of poles (NP) rotary converter 102 is typically dependent upon system parameters, such as the number of possible air gaps. However, the number of poles (NP) of the system influences the number of mechanical degrees (NMD) of rotor angular displacement necessary to transfer power for a given electrical frequency differential (EFD), as indicated by the expression NMD = 2 * EFD/NP. Thus, a high pole number (high NP) can greatly reduce the number of mechanical degrees (NMD) of angular shift required to achieve the electrical shift. For example, a -30 to +30 degree electrical shift is only -2 to +2 degrees of mechanical shift on a 30 pole wound-rotor motor. By reducing the mechanical angle to be shifted, the forces required can be greatly reduced, or conversely the response time greatly increased, to achieve the desired shift.

Fig. 3A and Fig. 3B show electrical power interconnection system 100 having a specific rotor drive section 118'. Rotor drive section 118' employs worm gear 160 meshing with rotor radial gear 162 as a linkage, and additionally employs worm gear servo driver 164 (e.g., a stepper motor) as an actuator. In addition, Fig. 3A and Fig. 3B show specific mounting structure of rotor assembly 110, particularly thrust and radial bearing 170 and top radial bearing 172 which facilitate both placement and rotation of rotor assembly 110. An advantage of rotor drive section 118' is that the worm gear drive tends to be self-locking. Should its associated servo driver 164 fail to turn, rotor assembly 110 will be locked in position until the electrical phase error reaches 360 degrees. At such time protective relaying will take interconnection system 110 off-line.

As mentioned above, in other embodiments other types of mechanisms are utilized for rotor drive section 118. Whereas rotor drive section 118' of Fig. 3A and Fig. 3B provides a solid connection of rotor assembly 110 to worm gear 160, such solid connection need not necessarily occur for other embodiments. For example, in one embodiment a torsion spring/damper system is inserted between the worm gear 160 and rotor assembly 110 to adjust mechanical dynamics. In such a system, the worm gear-based rotor drive section 118' displaces the phase (for example, 20 electrical degrees), then the combination of electrical energy and mechanical energy is tuned to match the time constants of the load being fed. The result is a uniform power input on the utility side and stabilization of the system load.

In the examples discussed above, the differing electrical characteristic for two electrical systems has been frequency. It should also be understood that, with some modification, interconnection system 100 can be adapted to serve as a phase shifting transformer for shifting only phase angle. In such adapted embodiment, collector rings 114 are replaced with a suspended Litz wire and rotor assembly 102 does not move more than +/- 90 degrees. Pneumatic or hydraulic rams are optionally inserted in place of the torsion spring/damper system described above. The rams jerk rotor assembly into a desired +X to -X degrees (e.g., X being less than or equal to 90 degrees), rather than causing rotation of rotor assembly 110. Such embodiment is particularly effective for an ordinary phase shifting transformer which can rapidly change the shift (e.g., within 100 milliseconds or less). The forces used to accomplish the jerk are kept to a manageable level by virtue of the large number of poles in the machine and hydrodynamic bearings. The more poles, the smaller the angular displacement required to meet the electrical displacement. The smaller the displacement, the smaller the angular acceleration and thus the smaller the force required to accomplish some change in position in a given time requirement. There are limitations on the reduction of mechanical degrees by the technique of increasing the number of poles, particularly the limitations of windability and the required angular resolution of worm gear 160.

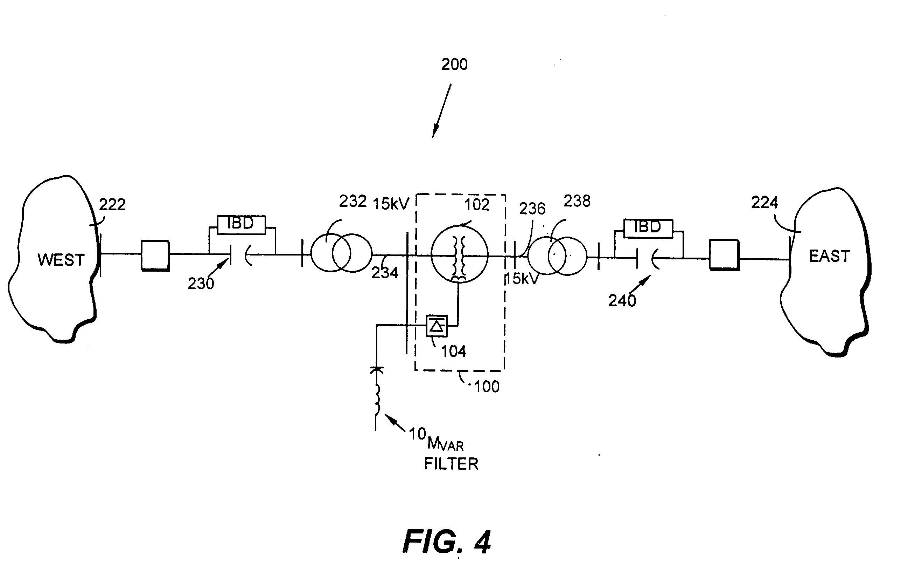

Fig. 4 shows incorporation of electrical power interconnection system 100 of the present invention in a substation 200. Substation which electrical interconnects a first electrical system 222 and to a second electrical system 224. It should be understood that first electrical system 222 and second electrical system 224 have differing electrical characteristic(s), particularly electrical frequency. For example, first electrical system 222 can be an Western utility (labeled "West") while second electrical system 224 can be an Eastern utility (labeled "East"). In the illustration of Fig. 4, both the East and West systems/utilities operate at 230kV.

Power supplied by Western system 222 enters substation 200 of Fig. 4 through series power capacitor 230 (20 Mvar) and is stepped down via 100 MVA generator stepup (GSU) transformer 232 from 230kV to 15kV. Stepped-down power from transformer 232 is applied on input line 234 to rotary converter 102 of interconnection system 100. As shown in Fig. 2, input line 234 is actually the three phase lines RA, RB, and RC connected to collector rings 114. An electrical field and power are established on rotor assembly 110, are transferred to stator 112, and transferred from stator 112 on output line 236 at 15kV. As understood from Fig. 2, output line 236 is actually the three phase lines SA, SB, and SC. Power output from stator 112 on output line 236 is stepped up at 100 MVA generator stepup (GSU) transformer 238 from 15kV to 230kV. Stepped-up power from transformer 238 is then applied through series power capacitor 240 (20 Mvar) to Eastern system 224.

As understood from the foregoing description of controller 104 in connection with Fig. 2, as included in substation 200 the controller 104 monitors the frequencies of both Eastern system 224 and Western system 222 as those frequencies wander through their differing and respective frequency ranges. As the differing frequencies are monitored, controller 104 generates a drive signal for adjusting the angular position of rotor assembly 110 so that electrical power may be transmitted from system 222 to system 224.

In the above regard, if the Western system 222 were at 59.9 Hz and the Eastern system 224 were at 60.1 Hz, interconnection system 100 would require a .2 Hz change for power transfer from the Western system 222 to the Eastern system 224. For a 2-pole device, the requisite rotational velocity for rotary converter 102 would be 120*(.2)/1 = 12 revolutions per minute. Given the fact that these frequencies also fluctuate or wander, rotary converter 102 should also be capable of =/1 .50 Hz, or a speed range from +30 to -30 revolutions per minute (RPMs) for the 2-pole equivalent.

In the illustration of Fig. 4, controller 104 is a 1 MW torque control converter, and in one embodiment includes a cycloconvertor as one example of a precision drive system.

Whereas the DC-link interconnection system 20 of Fig. 1 imposes costs of approximately $200/kw, interconnection system 100 of the present invention costs only about $100/kw.

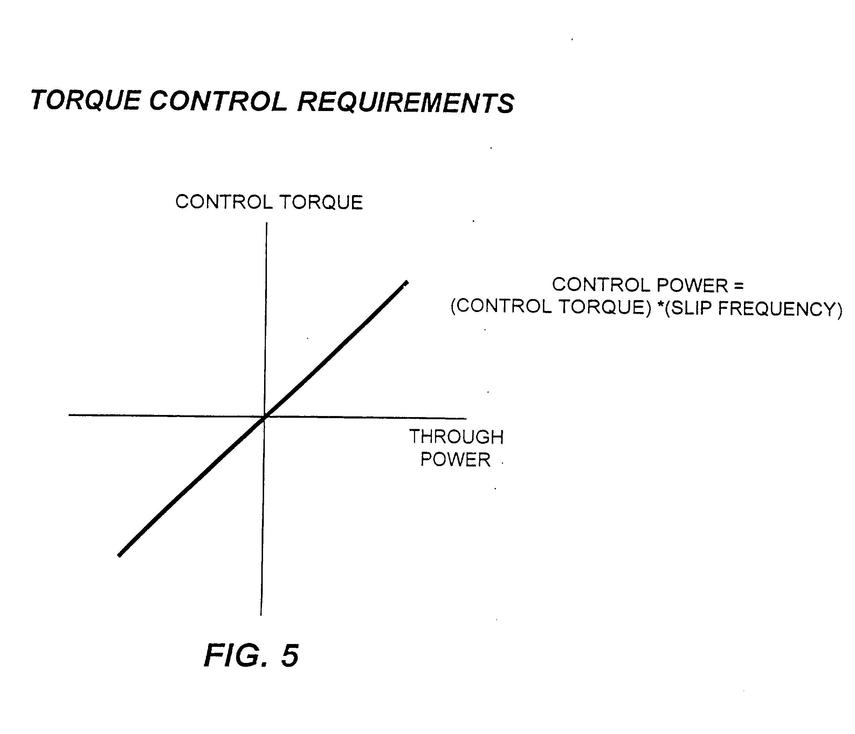

Fig. 5 shows the linear relationship between control power and the slip frequency (f1-f2) between the first and second electrical systems. For constant power into the machine and constant load power factors, the electromagnetic torque developed is constant. As the slip between the systems increases, the RPM required to match them increases, and the product of the torque and speed is power required by the drive.

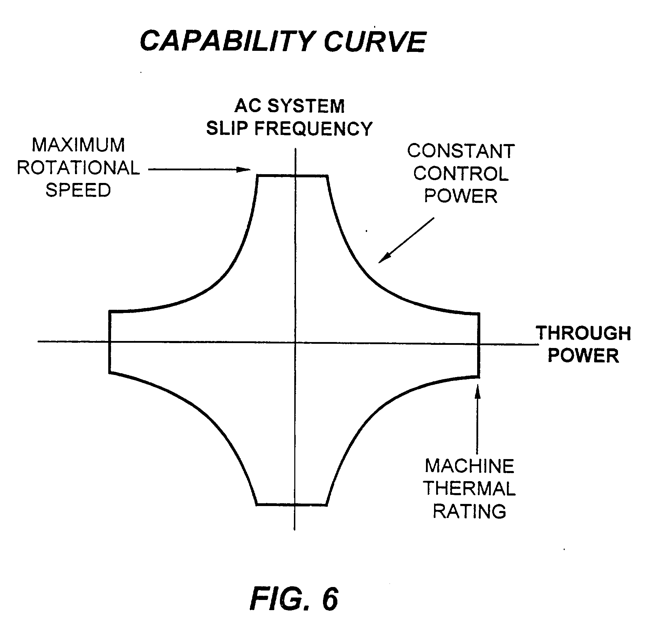

Fig. 6 shows the practical capability curves of the drive system of the present invention. Limitations shown on the vertical axis are labeled "Slip Frequency", which represents the maximum power of the reversible drive. The relationship between slip and power was shown in Fig. 5. "Through Power" is a machine thermal rating if maximum torque is provided by an electromechanical drive (e.g., a maximum thrust rating for worm gear bearing). "Through Power" is essentially material-limited, whether insulation class for a winding or a material stress allowable, respectively.

Advantageously, interconnection system 100 of the present invention performs continuous phase shifting by controlling rotor angle (i.e., the angular position of rotor assembly 110). Interconnection system 100 permits continuous adjustment of electrical phase by virtue of its potential 360 degree rotation, making the system a very low frequency synchronous converter. Moreover, interconnection system 100 can be repetitively displaced through large angular displacements to accomplish very large electrical phase shifts in a rapidly changing power condition on a large system.

Whereas typical synchronous converters run at constant, uni-directional angular velocity of hundreds or thousands of RPMs, rotary converter 102 of interconnection system 100 runs, forward or backward, at less than 50 RPM. Control within .01 electrical degrees is attainable on a continuous basis within 100 mx or six cycles at 60 Hz.

Interconnection system 100 provides accurate and reliable phase shift control, with the ability to follow frequency drift and control phase in all four quadrants of control. Thus, interconnection system 100 not only transfers power, but can also modify power in mid-air, by accomplishing phase shift on-the-fly.

Although described above for its interconnect function, interconnection system 100 can also serve as an energy storage system. Interconnection system 100 can be used to store energy, either by inductive energy or rotational inertia, to average large pulsating loads, similar to those present in arc melters for steel processing.

While the invention has been particularly shown and described with reference to the preferred embodiments thereof, it will be understood by those skilled in the art that various alterations in form and detail may be made therein without departing from the spirit and scope of the invention. For example, whereas in the foregoing description a supply electrical system has been illustrated as being connected to collector rings 114 and a receiver electrical system has been illustrated as being connected to stator 112, it should be understood that these illustrated connections can be reversed.

**Claims**

1. An electrical interconnection system comprising:

   a rotary converter for coupling to a first electrical system and to a second electrical system, the first electrical system and the second electrical system having a differing electrical characteristic;
   a controller which bidirectionally operates the rotary converter at a variable speed for transferring power from the first electrical system to the second electrical system.

2. The system of claim 1, wherein the first electrical system and the second electrical system operate at differing electrical frequencies.

3. The system of claim 2, further comprising a feedback network which detects the electrical frequency of the first electrical system and the electrical frequency of the second electrical system, and wherein the controller adjusts an angular position of the rotary converter to match the phase of the first electrical system and the phase of the second electrical system.

4. The system of claim 1, wherein the first electrical system and the second electrical system are a respective first electrical utility company and a second electric utility company.

5. A substation for electrically interconnecting a first electrical system and to a second electrical system, the first electrical system and the second electrical system having a differing electrical characteristic, the substation comprising:

   a step-down transformer coupled to the first electrical system;
   a step-up transformer coupled to the second electrical system;
   a rotary converter coupled to the step-down transformer and to the step-up transformer;
   a controller which bidirectionally operates the rotary converter at a variable speed for transferring power from the first electrical system to the second electrical system.

6. The system of claim 10, wherein the rotary converter comprises:

   a rotor connected to a first of the step-down and step-up transformers;
   a stator connected to a second of the step-down and step-up transformers;
   an actuator for rotating the rotor;
   a feedback network which detects magnitude of the differing electrical characteristic;
   wherein the controller is responsive to the magnitude detected by the feedback network for controlling the actuator whereby the rotor is bidirectionally rotated at a variable speed.

7. An electrical interconnection system comprising:

   a rotary converter for coupling to a first electrical system and to a second electrical system, the first electrical system and the second electrical system having a differing electrical characteristic;
   a closed loop angular positioning subsystem which bidirectionally operates the rotary converter for transferring power from the first electrical system to the seccnd electrical system.

8. A method of interconnecting two electrical systems, the method comprising:

   coupling a rotary converter to a first electrical system and to a second electrical system, the first electrical system and the second electrical system having a differing electrical characteristic;

operating the rotary converter bidirectionally and at a variable speed for transferring power from the first electrical system to the second electrical system.

9. The method of claim 8, wherein the controller is responsive to a magnitude of the differing electrical characteristic detected by a feedback network for controlling the actuator whereby the rotor is bidirectionally rotated at a variable speed.

10. The method of claim 8 or 9, wherein the variable speed is no more than 50 revolutions of rotary converter per minute.

**FIG. 1**

*(PRIOR ART)*

EP 0 749 190 A2

FIG. 2

FIG. 3A

164

WORM GEAR
SERVO
DRIVER

160

CSO

A

114

110

162

1/2

FIG. 3B

11

**FIG. 4**

EP 0 749 190 A2

# TORQUE CONTROL REQUIREMENTS

CONTROL TORQUE

CONTROL POWER =
(CONTROL TORQUE) *(SLIP FREQUENCY)

THROUGH
POWER

## FIG. 5

EP 0 749 190 A2

*CAPABILITY CURVE*

FIG. 6